# DEMANDE DE BREVET EUROPEEN

(11) **EP 1 442 925 A1**
(43) Date de publication de la demande: **04.08.2004**
(21) Numéro de dépôt: 04290234.6
(22) Date de dépôt: 29.01.2004
(51) Int. Cl.: B60N 2/44, B60N 2/20

(54) **Siège pliable à encombrement réduit**

(30) Priorité: 31.01.2003 FR 0301143
(71) Demandeur: Centre d'Etude et de Recherche pour l'Automobile ( CERA), 51100 Reims (FR)
(72) Inventeur: Bonfils, Xavier, 51100 Reims (FR)
(74) Mandataire: Geismar, Thierry

(57) **Abrégé**

L'invention concerne un siège (1), notamment pour véhicule automobile, comprenant une assise (2) et un dossier (3) montés en rotation l'un par rapport à l'autre autour d'un axe (5) situé sensiblement à l'intersection (6) des plans de l'assise et du dossier, entre une position d'utilisation dans laquelle le dossier (3) et l'assise (2) sont éloignés l'un de l'autre, et une position pliée dans laquelle le dossier (3) et l'assise (2) sont empilés l'un sur l'autre, l'assise (2) et le dossier (3) comprenant chacun un corps en mousse (7) pourvu de zones latérales de maintien (8) qui s'étendent en relief par rapport à la surface d'utilisation dudit corps (7), ledit siège (1) étant caractérisé en ce que chaque corps (7) comprend en outre des zones latérales complémentaires (9) qui sont agencées, lorsque le siège (1) est en position pliée, pour loger respectivement une zone de maintien (8) de l'autre corps (7).

L'invention a également pour objet un procédé de réalisation d'un élément de garnissage pour siège de véhicule automobile.

## Description

L'invention concerne un siège, notamment pour véhicule automobile, ainsi qu'un procédé de réalisation d'un élément de garnissage pour un tel siège.

L'invention concerne plus particulièrement un siège de véhicule automobile dont l'assise et le dossier sont pourvus de zones latérales destinées à améliorer le maintien du passager lors des mouvements du véhicule.

Pour assurer leur fonction de maintien, ces zones sont prévues en relief par rapport à la surface d'utilisation du siège, et s'étendent sensiblement sur toute la longueur de celui-ci.

Toutefois, la géométrie et la localisation de telles zones présentent des inconvénients lorsque le siège sur lequel elles sont prévues est pliable, par exemple pour un siège destiné à la troisième rangée du véhicule. En effet, dans ce cas, la présence des zones latérales de maintien ne permet pas d'obtenir un pliage compact du siège, ce qui limite l'espace de rangement rendu disponible par le repliement dudit siège.

Pour pallier cet inconvénient, l'invention propose un siège dont l'assise et le dossier comprennent chacun un corps en mousse pourvu de zones latérales, les zones latérales du dossier et de l'assise étant agencées pour s'emboîter les unes dans les autres lorsque le siège est en position pliée. En outre, les zones de l'assise et du dossier assurent un maintien du passager lorsque le siège est en position d'utilisation.

Le dossier et l'assise d'un tel siège présentent également l'avantage de pouvoir être réalisés par la technique de moulage dite « in situ », qui permet l'obtention directe de la pièce souhaitée en sortie de moule et qui est particulièrement adaptée pour obtenir des zones de géométrie en relief ou en creux.

A cet effet, et selon un premier aspect, l'invention propose un siège, notamment pour véhicule automobile, comprenant une assise et un dossier montés en rotation l'un par rapport à l'autre autour d'un axe situé sensiblement à l'intersection des plans de l'assise et du dossier, entre une position d'utilisation dans laquelle le dossier et l'assise sont éloignés l'un de l'autre, et une position pliée dans laquelle le dossier et l'assise sont empilés l'un sur l'autre, l'assise et le dossier comprenant chacun un corps en mousse pourvu de zones latérales de maintien qui s'étendent en relief par rapport à la surface d'utilisation dudit corps, chaque corps comprenant en outre des zones latérales complémentaires qui sont agencées, lorsque le siège est en position pliée, pour loger respectivement une zone de maintien de l'autre corps.

Selon un deuxième aspect, l'invention propose un procédé de réalisation d'un élément d'un garnissage pour un tel siège de véhicule automobile, du type comprenant un corps en mousse pourvu d'un revêtement, ledit élément étant destiné à former l'assise ou le dossier dudit siège, ledit procédé utilisant un moule comprenant une cuve et un couvercle définissant entre eux une cavité de moulage lorsque le moule est fermé, ledit procédé comprenant les étapes prévoyant de :
- prévoir une coiffe formant au moins une partie du revêtement ;
- disposer la coiffe sur une partie de la surface de la cavité de moulage ;
- injecter une mousse ou un mélange précurseur de mousse à l'intérieur de la cavité de moulage ;
- mouler ledit élément de sorte à former des zones latérales de maintien et des zones latérales complémentaires sur le corps en mousse ;
- démouler ledit élément.

D'autres objets et avantages de l'invention apparaîtront au cours de la description qui suit, faite en référence aux dessins annexés dans lesquels :
- la figure 1 est une vue schématique en perspective d'un siège selon l'invention, en position d'utilisation ;
- la figure 2 est une vue schématique en perspective du siège de la figure 1, en position pliée, faisant apparaître en outre le piétement dudit siège.

Le siège 1 décrit en relation avec les figures est destiné à être disposé dans l'habitacle d'un véhicule automobile, et notamment en troisième rangée. Ce siège 1 comprend une assise 2 et un dossier 3 sur lequel est monté un appui-tête 4.

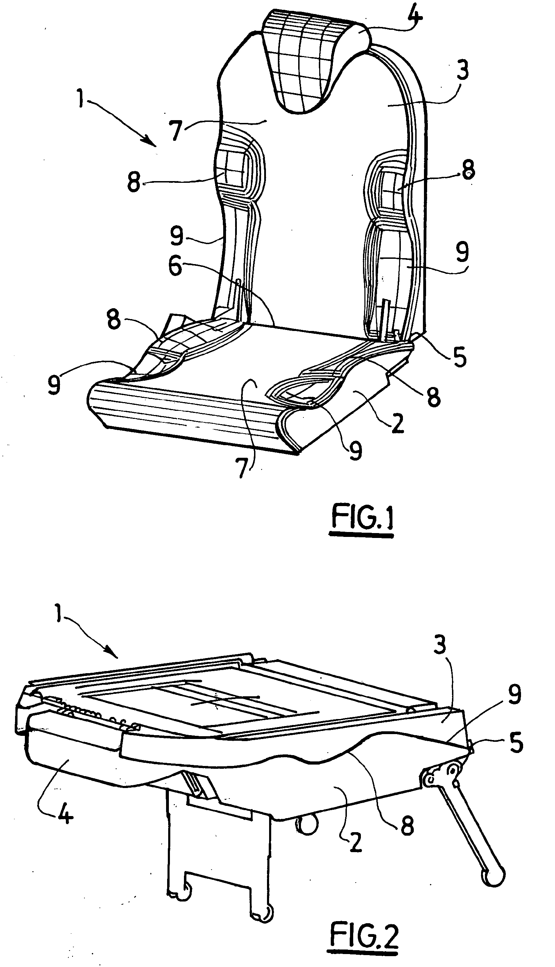

L'assise 2 et le dossier 3 sont montés en rotation l'un par rapport à l'autre autour d'un axe 5 situé sensiblement à l'intersection 6 des plans de l'assise 2 et du dossier 3, de sorte à être pliable. Ainsi, il est possible de faire passer ce siège 1 d'une position d'utilisation, représentée sur la figure 1, dans laquelle le dossier 3 et l'assise 2 sont éloignés l'un de l'autre, à une position pliée dans laquelle le dossier 3 et l'assise 2 sont empilés l'un sur l'autre, tel que représenté sur la figure 2.

Pour assurer le confort et le maintien du passager en position assise, l'assise 2 et le dossier 3 comprennent chacun un corps en mousse 7 pourvu de zones latérales de maintien 8. Ces zones de maintien 8 s'étendent en relief par rapport à la surface d'utilisation du corps 7. En particulier, une zone latérale de maintien 8 est prévue de chaque côté du dossier 3 et/ou de l'assise 2, de telle sorte que le dossier 3 et l'assise 2 comprennent chacun deux zones de maintien 8.

Selon la réalisation représentée, les zones latérales de maintien 8 prévues sur le dossier 3 sont situées sur la partie supérieure du dossier 3, à distance de l'axe de rotation 5. Ces zones 8 sont prévues pour, lorsque le passager est en position assise, être situées de part et d'autre de la partie supérieure du tronc du passager, de sorte à le maintenir de façon latérale sans pour autant gêner les mouvements des ses bras.

Selon cette réalisation, les zones latérales de maintien 8 prévues sur l'assise 2 sont situées sur la partie arrière de ladite assise, au voisinage de l'axe de rotation 5. Ainsi, lorsque le passager est en position assise, ces zones 8 sont situées de part et d'autre du haut des cuisses du passager, de sorte à le maintenir latéralement sans gêner les mouvements de ses jambes.

Selon l'invention, chaque corps en mousse 7 comprend en outre des zones latérales complémentaires 9 qui sont agencées, lorsque le siège 1 est en position pliée, pour loger respectivement une zone latérale de maintien 8 de l'autre corps, de sorte que l'assise 2 et le dossier 3 soient disposés de façon sensiblement parallèle.

A cet effet, selon la réalisation représentée, chaque zone latérale complémentaire 9 de l'assise 2, respectivement du dossier 3, forme un creux dont la géométrie est agencée pour loger une zone latérale de maintien 8 disposée sur le dossier 3, respectivement l'assise 2, de sorte que ces différentes zones 8, 9 puissent s'emboîter lorsque le siège 1 passe en position pliée. Ainsi, un tel siège, en position pliée, occupe un volume minimal dans l'habitacle, de par la complémentarité des formes de ces différentes zones latérales 8,9, tel qu'illustré sur la figure 2.

On décrit à présent le procédé de réalisation d'un élément de garnissage pour un tel siège, selon la technique de moulage dite « in situ » qui consiste typiquement à injecter un mélange précurseur de mousse dans un moule dont la paroi interne a été au préalable recouverte au moins partiellement d'un revêtement.

L'élément de garnissage est destiné à former l'assise 2 ou le dossier 3 du siège 1. Il comprend un corps en mousse 7 pourvu d'un revêtement, notamment textile, ledit élément permettant ainsi d'assurer le confort du passager tout en conférant au siège 1 un aspect et une tenue satisfaisante.

Le procédé de réalisation d'un tel élément utilise un moule comprenant une cuve et un couvercle définissant entre eux une cavité de moulage lorsque le moule est fermé.

Dans une première étape du procédé, on prévoit une coiffe formant au moins une partie du revêtement, cette coiffe étant notamment formée d'un matériau textile.

Puis la coiffe est disposée sur une partie de la surface de la cavité de moulage formée entre la cuve et le couvercle du moule. Selon une réalisation, la coiffe est disposée sur la cuve du moule, ses bords étant disposés sur la plan de joint.

Selon une autre réalisation, la coiffe peut être disposée sur le couvercle du moule, et une étape supplémentaire du procédé peut alors consister à disposer une couche de matériau sur la cuve, cette couche de matériau, notamment rigide, étant destinée à former une autre partie du revêtement.

L'étape suivante est l'étape de moussage in situ, qui consiste à injecter une mousse ou un mélange précurseur de mousse à l'intérieur de la cavité de moulage, ladite mousse étant destinée à former le corps 7 de l'élément de garnissage.

Dans la réalisation selon laquelle la coiffe est disposée sur la cuve du moule, l'injection est réalisée sur la surface interne de la coiffe. Et, dans la réalisation selon laquelle la coiffe est disposée sur le couvercle du moule, l'injection est réalisée dans la cuve du moule, et le cas échéant sur la couche de matériau formant l'autre partie du revêtement.

L'élément de garnissage est alors moulé de sorte à former, sur le corps en mousse 7, les zones latérales de maintien 8 en relief, et les zones latérales complémentaires 9 en creux, puis l'élément de garnissage est démoulé.

Ainsi, ce procédé permet d'obtenir de façon simple un élément de garnissage destiné à former le dossier 3 ou l'assise 2 d'un siège de véhicule automobile pliable, ledit élément comprenant, directement en sortie de moule, des zones latérales 8, 9 dont la géométrie est agencée pour permettre un pliage optimal dudit siège dans l'habitacle.

## Revendications

1. Siège (1), notamment pour véhicule automobile, comprenant une assise (2) et un dossier (3) montés en rotation l'un par rapport à l'autre autour d'un axe (5) situé sensiblement à l'intersection (6) des plans de l'assise et du dossier, entre une position d'utilisation dans laquelle le dossier (3) et l'assise (2) sont éloignés l'un de l'autre, et une position pliée dans laquelle le dossier (3) et l'assise (2) sont empilés l'un sur l'autre, l'assise (2) et le dossier (3) comprenant chacun un corps en mousse (7) pourvu de zones latérales de maintien (8) qui s'étendent en relief par rapport à la surface d'utilisation dudit corps (7), ledit siège (1) étant **caractérisé en ce que** chaque corps (7) comprend en outre des zones latérales complémentaires (9) qui sont agencées, lorsque le siège (1) est en position pliée, pour loger respectivement une zone de maintien (8) de l'autre corps (7).

2. Siège selon la revendication 1, **caractérisé en ce qu'**une zone latérale de maintien (8) est prévue de chaque côté du dossier (3) et/ou de l'assise (2).

3. Siège selon la revendication 1 ou 2, **caractérisé en ce que** les zones latérales de maintien (8) prévues sur le dossier (3) sont situées sur la partie supérieure dudit dossier, à distance de l'axe de rotation (5).

4. Siège selon l'une quelconque des revendications 1 à 3, **caractérisé en ce que** les zones latérales de maintien (8) prévues sur l'assise (2) sont situées sur la partie arrière de ladite assise, au voisinage de l'axe de rotation (5).

5. Procédé de réalisation d'un élément d'un garnissage pour siège de véhicule automobile selon l'une quelconque des revendications 1 à 4, du type comprenant un corps en mousse (7) pourvu d'un revêtement, ledit élément étant destiné à former l'assise (2) ou le dossier (3) dudit siège, ledit procédé utilisant un moule comprenant une cuve et un couvercle définissant entre eux une cavité de moulage lorsque le moule est fermé, ledit procédé comprenant les étapes prévoyant de :
- prévoir une coiffe formant au moins une partie du revêtement ;
- disposer la coiffe sur une partie de la surface de la cavité de moulage ;
- injecter une mousse ou un mélange précurseur de mousse à l'intérieur de la cavité de moulage ;
- mouler ledit élément de sorte à former des zones latérales de maintien (8) et des zones latérales complémentaires (9) sur le corps en mousse (7) ;
- démouler ledit élément.

6. Procédé selon la revendication 5, **caractérisé en ce que** la coiffe est disposée sur la cuve du moule, le mélange précurseur de mousse ou la mousse étant injecté(e) sur la surface interne de la coiffe.

7. Procédé selon la revendication 5, **caractérisé en ce que** la coiffe est disposée sur le couvercle du moule, le mélange précurseur de mousse ou la mousse étant injecté(e) dans la cuve du moule.
